# EUROPEAN PATENT APPLICATION

(11) **EP 1 653 726 A2**
(43) Date of publication of application: **03.05.2006**
(21) Application number: 05110257.2
(22) Date of filing: 02.11.2005
(51) Int. Cl.: H04N 1/333

(54) **Data transmission apparatus and method**

(30) Priority: 02.11.2004 KR 2004088366
(71) Applicant: Samsung Electronics Co., Ltd., Suwon-si, Gyeonggi-Do (KR)
(72) Inventor: Hong, Seung-wook, Youngdeungpo-gu, Seoul (KR)
(74) Representative: Walaski, Jan Filip

(57) **Abstract**

A facsimile transmission speed setting method, medium, and apparatus. The facsimile transmission speed setting method may include transmitting a DCS signal and a training sequence using a transmitting fax unit that receives the DCS signal from a receiving fax unit, checking the training sequence at a receiving side of the receiving fax unit, and if there is no transmission error in the received training sequence, maintaining a current transmission speed by transmitting a CFR signal to the transmitting fax unit, checking for a transmission error in training sequence, and checking whether the transmission error is within a predetermined range. If the transmission error is within the predetermined range the current transmission speed is maintained by transmitting the CFR signal to the transmitting fax unit, and if the transmission error is not within the predetermined range the transmission speed is reduced by transmitting an FTT signal to the transmitting fax unit.

## Description

The present invention relates to data transmission, particularly but not exclusively to a facsimile transmission method and apparatus.

A facsimile machine, as a data communication terminal, transmits and receives information such as text or images, as well as being an office automation (OA) device to transmit facsimile data across a public switched telephone network (PSTN), e.g., a telephone line. Data is transmitted from a transmitting facsimile machine (hereinafter, referred to as a transmitting fax machine) that transmits the facsimile data to a receiving facsimile machine (hereinafter, referred to as a receiving fax machine) that receives the facsimile data. Recently, communications using facsimile machines have become common, with much information being interchanged using such machines. A predetermined communication protocol is needed in this regard to strictly specify an information representation format or to order the timing of various control information related to such communications. The protocol generally includes specifications for the establishment, maintenance, and termination of facsimile connections.

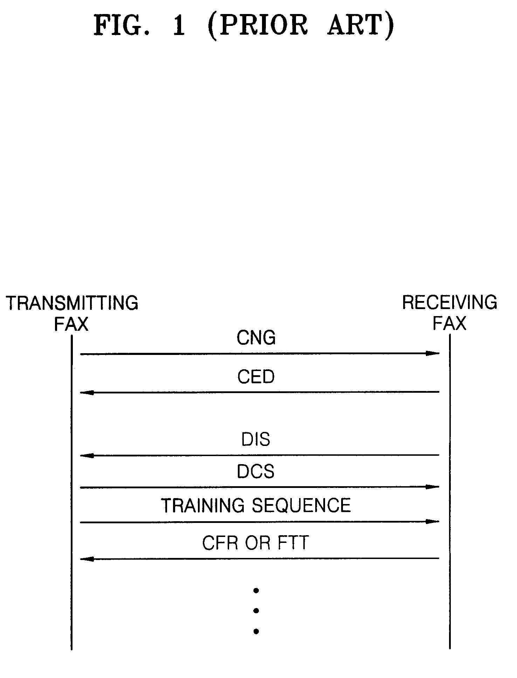

Figure 1 illustrates a conventional facsimile data transmission/receiving protocol. As shown in Figure 1, if a calling tone (CNG) signal is sent out, attempting to make a call from a transmitting fax machine to a receiving fax machine, the receiving fax machine sends out a called tone (CED) signal in response to the CNG signal, thereby allowing the call to be connected.

When the call is connected, the receiving fax machine transmits a digital identification signal (DIS) to the transmitting fax machine. Here, when transmitting the DIS, the receiving fax machine informs the transmitting fax machine of various information about the speed, capacity, resolution, paper size, paper type, etc., for example, of the receiving fax machine. The transmitting fax machine then transmits a digital command signal (DCS), which is a digital setup command responding to a standard capacity confirmed by the DIS, to the receiving fax machine, and then sends out a training sequence to the receiving fax machine.

If no transmission error is detected in the training sequence, the receiving fax machine, having received the training sequence, transmits a confirmation to receive (CFR) signal, confirming that the entire procedure for the message transmission has completed and that the message transmission may begin. If the above process is successfully performed, actual data is transmitted, and when transmission of a message has been completed, a post message procedure is performed, and then the call is released.

The transmitting fax machine sends out the training sequence for 1.5 seconds for modem synchronization. When the receiving fax machine receives and checks the training sequence, even if only one bit is determined to potentially be incorrect, the receiving fax machine will determine that synchronization would not be easily maintained at the current training speed, and the receiving fax machine then sends back a fail-to-training (FTT) signal, to request the transmitting fax machine fall back to transmitting at a slower modem speed.

The inventors have appreciated that during typical data reception, the underlying original document is usually merely a text or letter, and, even with a small potential loss of data, there would generally be no difficulty in reading the transmitted original.

In other words, even though one bit of a received training sequence may potentially be incorrect, communication data is not disrupted sufficiently to make the underlying received document unreadable or cause the underlying communication to fail. Since in most cases the original document is a letter filled with characters, even though one or two lines of the original may be disturbed, there may still be no problem in identifying the received original document. In addition, in an error correction mode (ECM), broken data, for example data that is determined to potentially be incorrect, can be restored by a retransmission request and thus, this is not problematic.

Nevertheless, conventionally only faultlessness of receipt of the training sequence is emphasized, thereby reducing the transmission speed and maintaining communications at a lower speed. This reduced transmission speed may make a user feel that the communication quality is degraded when the user uses the facsimile machine.

The present invention aims to address the above problems.

According to the invention, there is provided a data transmission speed setting method, comprising checking a transmitted training sequence for transmission error and maintaining a current transmission speed if a detected transmission error in the training sequence is within a predetermined range.

Embodiments of the present invention provide a facsimile transmission method, medium, and apparatus by which a communication speed of a facsimile is maintained at an increased speed in a noisy environment, the total communication time is reduced, and consequently, the communication rate is increased over conventional systems.

To achieve the above and/or other aspects and advantages, embodiments of the present invention include a facsimile transmission speed setting method, including checking a transmitted training sequence for transmission error, and maintaining a current transmission speed if no transmission error is detected, and maintaining the current transmission speed if a detected transmission error in the training sequence is within a predetermined range, and reducing the current transmission speed if the detected transmission error is not within the predetermined range.

The maintaining of the current transmission speed may be accomplished through a sending of a confirmation to receive (CFR) signal from a receiving fax unit to a transmitting fax unit. Further, the reducing of the current transmission speed may be accomplished through a sending of a fail-to-training (FTT) signal from a receiving fax unit to a transmitting fax unit.

The method may further include checking whether a transmission speed resetting ode is set upon the detection of the transmission error, wherein the checking of the transmitted training sequence for the transmission error further includes determining whether the transmission error is within the predetermined range if the transmission speed resetting mode is set, and wherein the reducing of the current transmission speed further includes reducing the current transmission speed if the transmission speed resetting mode is not set.

The transmission speed resetting mode may be settable by a user using a user interface. Similarly, the predetermined range of the transmission error may be settable by a user using a user interface. The predetermined range of the transmission error may be expressed as an error percentage or a number of error bits.

To achieve the above and/or other aspects and advantages, embodiments of the present invention include a facsimile transmission speed setting method, including transmitting a digital command (DCS) signal and a training sequence from a transmitting fax unit, which receives a digital identification (DIS) signal from a receiving fax unit, maintaining a transmission speed of the transmitting fax unit at a current transmitting speed upon receipt, by the transmitting fax unit, of a transmitted confirmation to receive (CFR) signal from the receiving fax unit if the receiving fax unit detects a transmission error in the received training sequence is within a predetermined range, and reducing the current transmitting speed of the transmitting fax unit if the transmission error is not within the predetermined range, upon receipt of a fail-to-training (FTT) signal, by the transmitting fax unit, from the receiving fax unit.

The detection of the transmission error may further include checking whether a transmission speed resetting mode is set upon the detection of the transmission error, and reducing the current transmission speed if the transmission speed resetting mode is not set, and determining whether the transmission error is within the predetermined range if the transmission speed resetting mode is set.

The transmission speed resetting mode may be settable by a user using a user interface. The predetermined range of the transmission error may be settable by a user using a user interface. In addition, the predetermined range of the transmission error may be expressed as an error percentage or a number of error bits.

To achieve the above and/or other aspects and advantages, embodiments of the present invention include a transmission speed setting apparatus, including a training sequence (TS) error checking unit to receive a training sequence from a transmitting unit, and to check for a transmission error in the training sequence, a confirmation to receive (CFR) transmitting unit to transmit a CFR signal to the transmitting unit and to maintain a current transmission speed of the transmitting unit if no transmission error is detected in the training sequence, an error range checking unit to check whether a detected transmission error is within a predetermined range, and an error processing unit to implement a maintaining of the current transmission speed by transmitting the CFR signal to the transmitting unit if the detected transmission error is within the predetermined range, and to implement a reduction of the current transmission speed by transmitting a fail-to-training (FTT) signal to the transmitting unit.

The error range checking unit may include a transmission speed resetting mode checking portion to check whether a transmission speed resetting mode is set if the transmission error is detected, and a transmission speed resetting portion to implement the reduction in the current transmission speed if the transmission speed resetting mode is not set, and a transmission error range checking portion to perform the checking of whether the detected transmission error is within the predetermined range if the transmission speed resetting mode is set.

The apparatus may further include a user interface unit to provide a transmission speed resetting mode setting menu to set the transmission speed resetting mode by a user. The user interface unit may include an error range setting menu to set the predetermined range to be an error percentage or a number of error bits.

To achieve the above and/or other aspects and advantages, embodiments of the present invention include a medium including computer readable code to implement embodiments of the present invention.

Embodiments of the invention will now be described by way of example with reference to the accompanying drawings, in which:
Figure 1 illustrates a conventional facsimile data transmission/receiving protocol;
Figure 2 illustrates a multifunction peripheral (MFP) device having a facsimile apparatus, according to an embodiment of the present invention;
Figure 3 illustrates a facsimile transmission speed setting apparatus, according to an embodiment of the present invention;
Figure 4 illustrates an error range checking unit, according to an embodiment of the present invention; and
Figure 5 is a flowchart illustrating a facsimile transmission speed setting method, according to an embodiment of the present invention.

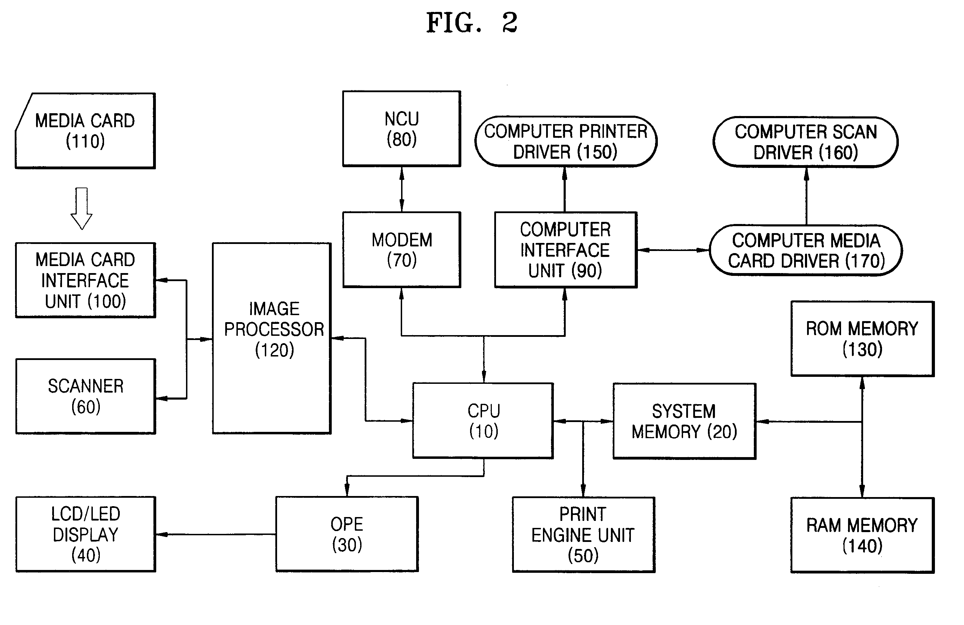

Figure 2 illustrates a multifunction peripheral (MFP) device having a facsimile apparatus, according to an embodiment of the present invention. A central processing unit (CPU) 10 may control the MFP device according to predetermined programs, for example. As only an example, a system memory 20 may store an operating program and a normal control program of the CPU 10, and may further store data as the CPU 10 executes programs. A ROM memory 130 may be a nonvolatile memory to store the control program, and a RAM memory 140 may be a volatile memory to temporarily store data based on execution of programs and image data, for example.

A print engine unit 50 may be included and print data of the system memory 20 or print data transmitted to a host computer printer driver 150, for example. A computer interface unit 90 may transmit print data from a host computer to the print engine unit 50, thereby printing data. Here, a media card 110 may allow the host computer to manage folders of the media card 110, to read/write the media card 110, and image files through a media card interface unit 100 of the MFP device, for example.

An operating panel (OPE) 30 may be implemented and may include a plurality of keys, and may apply key data, generated when a predetermined key is pressed, to the CPU 10, to display an operating state of a system to an internal LCD/LED display 40 using display data of the CPU 10, for example. The OPE 30 may further input voice data using a microphone C-mic, with the input voice data being converted into digital data by MODEM/DSP and stored in a memory.

A scanner 60 may be included and may convert analog image data generated using an image scanning sensor into a proper format of digital image data using an image processor 120 and may store the digital image data in a memory. The media card interface unit 100 may perform a hardware interface operation on a media card, such as a smart media card, memory stick, compact flash, etc., and may control the CPU 10, for example. When reading an image from the media card, the media card interface unit 100 may properly manipulate the image and convert the image into a proper format using the image processor 120 and then transmit the image to the host computer or the print engine unit 50 or the system memory 20, for example. A modem 70 may be implemented to send out a variety of tones and provide modulation/demodulation operations related to communications. A network control unit (NCU) 80 may be operated by control of the CPU 10, for example, and may form a calling loop of a telephone line and may interface the telephone line with the modem 70.

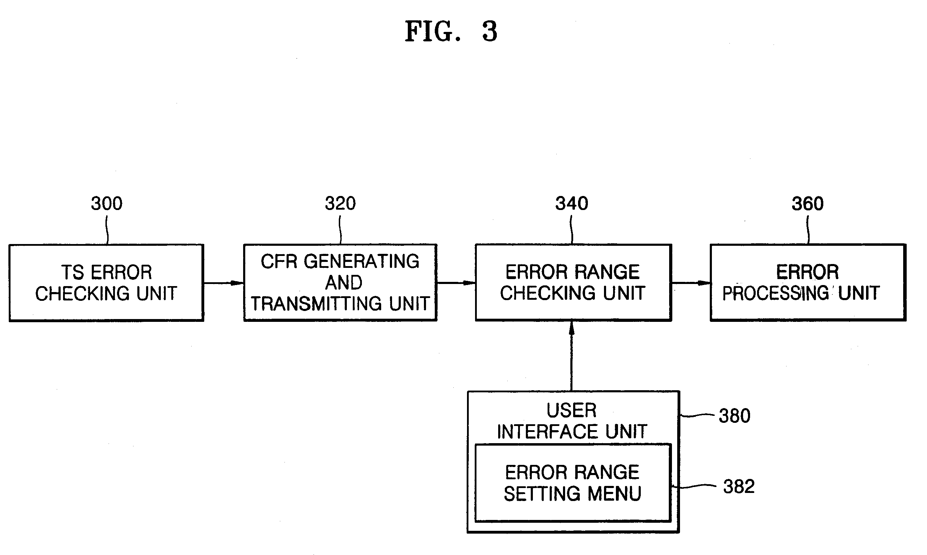

Figure 3 illustrates a facsimile transmission speed setting apparatus, according to an embodiment of the present invention. The facsimile transmission speed setting apparatus of Figure 3 may include a training sequence (TS) error checking unit 300, a confirmation to receive (CFR) generating and transmitting unit 320, an error range checking unit 340, and an error processing unit 360. The facsimile transmission speed setting apparatus may further include a user interface unit, for example.

The TS error checking unit 300 may be installed at a receiving side of the facsimile unit, e.g., a facsimile module, facsimile machine, or similar functional operating medium. If a transmitting fax unit transmits a training sequence, the TS error checking unit 300 may receive the training sequence, detect the training sequence, and check for transmission errors. The CFR generating and transmitting unit 320 may be installed at the receiving side of the facsimile unit. If no transmission errors are detected, the CFR generating and transmitting unit 320 can maintain a current transmission speed by transmitting a CFR signal to the transmitting fax unit.

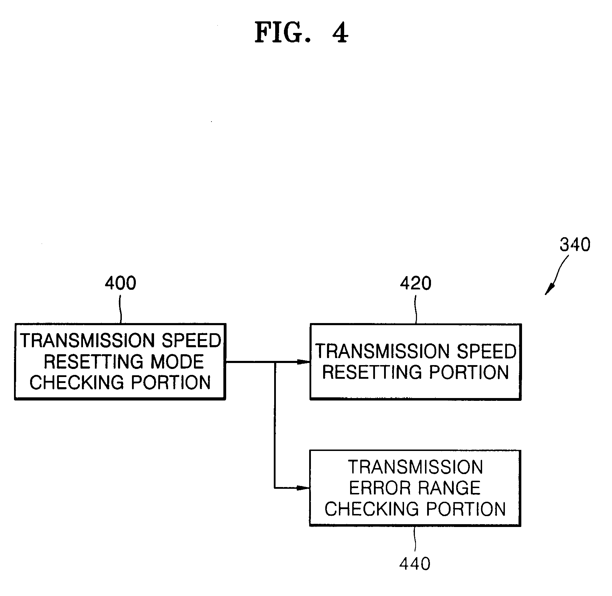

The error range checking unit 340 may be installed at the receiving side of the facsimile unit. If there is a transmission error, the error range checking unit 340 may check whether or not the transmission error is within a predetermined range. Figure 4 illustrates an example implementation of an error range checking unit 340. The error range checking unit 340 of Figure 4 may, for example, include a transmission speed resetting mode checking portion 400, a transmission speed resetting portion 420, and a transmission error range checking portion 440. When the mode of the transmission speed resetting mode checking portion 400 is a transmission speed resetting mode, and if there is a transmission error detected in the checking of the received training sequence, the transmission speed resetting mode checking portion 400 may check whether the transmission speed resetting mode is set to "ON." If the transmission speed resetting mode is not set to ON, the transmission speed resetting portion 420 may reduce the current transmission speed by transmitting a fail-to-training (FTT) signal to the transmitting fax unit. If the transmission speed resetting mode is set to ON, the transmission error range checking portion 440 may check whether the transmission error is within a predetermined range.

If the transmission error is within the predetermined range, the error processing unit 360 may maintain the transmission speed by transmitting the CFR signal to the transmitting fax unit. If the transmission error is not within the predetermined range, the error processing unit 360 may reduce the transmission speed by transmitting the FTT signal to the transmitting fax unit.

Referring again to Figure 3, the facsimile transmission speed setting apparatus, according to an embodiment of the present invention, may further include a user interface unit 380. The user interface unit 380 may provide a transmission speed resetting mode setting menu for setting a transmission speed resetting mode, e.g., by a user, and may include an error range setting menu 382, for example. The error range setting menu 382 may permit the setting of a predetermined range for the transmission error to a percentage or a particular number of error bits.

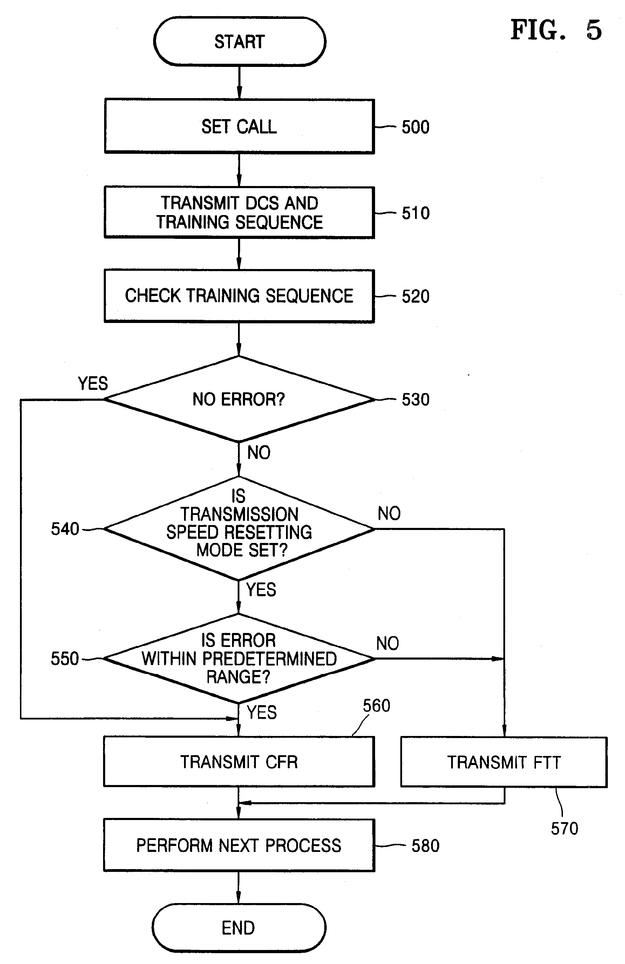

Figure 5 is a flowchart illustrating a facsimile transmission speed setting method, according to an embodiment of the present invention.

First, in operation 500, a transmitting fax unit may transmit a calling tone (CNG) signal to a receiving fax unit, and the receiving fax unit may transmit a called tone (CED) signal to the transmitting fax unit, thereby setting up the call for facsimile transmission between the transmitting and receiving fax units. If call set-up is completed, the receiving fax unit may then transmit a digital identification signal (DIS) to the transmitting fax unit. In this case, the receiving fax unit may further inform the transmitting fax unit of various information about speed, capacity, resolution, paper size, paper type, etc., for example, of the receiving fax unit.

In operation 510, the transmitting fax unit, which receives the DIS, may consecutively transmit a digital command signal (DCS) and training sequence.

In operation 520, the receiving fax unit may detect the DCS, using the TS error checking unit 300, for example, and may check for errors in the training sequence. In this case, if there are no transmission errors in the training sequence, the receiving fax unit may keep the transmission speed at the current level by transmitting a confirmation to receive (CFR) signal to the transmitting fax unit using the CFR generating and transmitting unit 320 (operation 560).

If a transmission error exists in the training sequence, a transmission speed resetting mode is checked to see if the transmission speed resetting mode is set, e.g., using the transmission speed resetting mode checking portion 400, in operation 540.

If the transmission speed resetting mode is not set to "ON," for example, that is, if the transmission speed resetting mode is set to OFF, a fail-to-training (FTT) signal may be transmitted to the transmitting fax unit, e.g., using the transmission speed resetting portion 420, in operation 570. The transmission speed of the transmitting fax unit may then be reduced. If the transmission speed resetting mode is set to ON (operation 540), the transmission error is examined to determine whether the transmission error is within a predetermined range, e.g., using the transmission error range checking portion 440, in operation 550.

If the transmission error is within the predetermined range, the CFR signal may be transmitted to the transmitting fax unit, using the error checking unit 360, for example, in operation 560, and the transmission speed of the transmission fax unit may be maintained at the current level for further communication, in operation 580.

If the transmission error is not within the predetermined range, the FTT signal may be transmitted to the transmitting fax unit, e.g., using the error checking unit 360, in operation 570, and further communication proceeds at a reduced transmission speed, in operation 580.

In an alternative example, the sequence in which operations 540 and 550 are carried out may be reversed, so that if a transmission error is determined to exist in the received training sequence, the receiving fax unit may then determine whether the transmission error is within a predetermined range. If it is, then the transmission speed resetting mode is examined to determine if it is set. Only if both the error falls within a predetermined range and the speed resetting mode is set (to the on state), is the CFR signal transmitted (step 560).

The transmission speed resetting mode may be set by a user using the user interface unit 380. For example, if the transmission speed resetting mode is set to ON, and if only one bit of the training sequence is determined to potentially be in error, the FTT may not be immediately be transmitted to the transmitting fax unit. In this case, an error range, indicating a permissible amount of transmission error of the training sequence, may be set by the user using the user interface unit 380, or may be selected by the user if the error range is given in a menu format, for example. In addition, the amount of transmission error may be expressed as a percentage or according to the number of error bits. For example, the amount of the transmission error may be indicated in units of 10%, or by the number of error bits.

In the meantime, another method embodiment will now be further described. The receiving fax unit may receive the training sequence and check for corresponding error bits. Assuming that a predetermined error range of the training sequence is set to 1%, and the transmission speed of the training sequence of the transmitting fax unit is set to 14,400 bps, 1% corresponds to 216 bits if the training sequence lasts for 1.5 seconds. If the transmission speed of the transmitting fax is 4,800 bps for 1.5 seconds, 1% corresponds to 72 bits. So, for example, if the receiving fax unit detects fewer than 216 error bits in the training sequence at a training sequence transmission speed of 14,400 bps, the transmitting fax unit does not need to request a transmission speed fall back but instead transmits the CFR signal and then receives a fax at the current speed. In this way, the speed at which the fax is received may be determined according to an error bit allowance rate in each bandwidth. However, if the number of transmission error bits is equal to or greater than 216, the FTT signal is transmitted, and then the process of reducing the transmission speed is performed. Consequently, even though part of the training sequence may be damaged, e.g., by noise and attenuation, a current speed would not need to be reduced, but may be kept at a higher speed than in conventional systems. As such, communications may be completed more quickly, which results in cost saving and the reduction the total communication time, thereby increasing the communication rate over other facsimile units.

Embodiments of the invention may also be embodied as computer readable code on a medium, e.g., a computer readable recording medium. The medium may be any data storage device that can store/transmit data which can be thereafter read by a computer system, for example. Examples of the medium may include read-only memory (ROM), random-access memory (RAM), CD-ROMs, magnetic tapes, floppy disks, and optical data storage devices, for example.

Although a few embodiments of the present invention have been shown and described, it would be appreciated by those skilled in the art that changes may be made in these embodiments without departing from the scope of the invention as defined in the claims.

## Claims

1. A data transmission speed setting method, comprising:
checking a transmitted training sequence for transmission error; and
maintaining a current transmission speed if a detected transmission error in the training sequence is within a predetermined range.

2. A method according to claim 1, further comprising reducing the current transmission speed if the detected transmission error is not within the predetermined range.

3. A method according to claim 1 or 2, comprising checking if a transmission speed resetting mode is set, and if the mode is set, determining if the transmission error is within the predetermined range.

4. A method according to claim 3, further comprising reducing the current transmission speed if the transmission speed resetting mode is not set.

5. A method according to claim 3 or 4, wherein the transmission speed resetting mode is settable by a user using a user interface.

6. A method according to any one of the preceding claims, wherein the predetermined range of the transmission error is settable by a user using a user interface.

7. The method of claim 6, wherein the predetermined range of the transmission error is expressed as an error percentage or a number of error bits.

8. A method according to any one of the preceding claims, wherein the step of maintaining the current transmission speed comprises sending a confirmation to receive (CFR) signal from a receiving fax unit to a transmitting fax unit.

9. A method according to any one of claims 2 to 8, wherein the step of reducing the current transmission speed comprises sending a fail-to-training (FTT) signal from a receiving fax unit to a transmitting fax unit.

10. A data transmission apparatus, comprising:
means for checking a transmitted training sequence for transmission error;
means for determining if a detected transmission error in the training sequence is within a predetermined range; and
means for maintaining a current transmission speed if the detected transmission error in the training sequence is within the predetermined range.

11. Apparatus according to claim 10, further comprising means for reducing the current transmission speed if the detected transmission error is not within the predetermined range.

12. Apparatus according to claim 10 or 11, comprising means for checking if a transmission speed resetting mode is set, wherein operation of the means for determining if the transmission error is within the predetermined range is dependent on whether the transmission speed resetting mode is set.

13. Apparatus according to claim 12, further comprising a user interface unit to provide a transmission speed resetting mode setting menu to permit a user to set the transmission speed resetting mode.

14. Apparatus according to claim 13, wherein the user interface unit comprises an error range setting menu to set the predetermined range to be an error percentage or a number of error bits.

15. A computer program, which when executed by a computer, is arranged to perform a method according to any one of claims 1 to 9.
